(19) 

**Europäisches Patentamt**
**European Patent Office**
**Office européen des brevets**

(11) **EP 4 625 270 A1**

(12) **EUROPEAN PATENT APPLICATION**

(43) Date of publication:
 **01.10.2025 Bulletin 2025/40**

(21) Application number: **24165772.5**

(22) Date of filing: **25.03.2024**

(51) International Patent Classification (IPC):
 **G06N 10/60** (2022.01)    **G06N 10/20** (2022.01)
 **G06N 20/00** (2019.01)

(52) Cooperative Patent Classification (CPC):
 **G06N 10/60; G06N 10/20; G06N 20/00**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(71) Applicant: **Terra Quantum AG**
 **9000 St. Gallen (CH)**

(72) Inventors:
 • **Somogyi, Wilfrid**
  **9000 St. Gallen (CH)**

 • **Pankovets, Ekaterina**
  **9000 St. Gallen (CH)**
 • **Kuzmin, Viacheslav**
  **9000 St. Gallen (CH)**
 • **Melnikov, Alexey**
  **9000 St. Gallen (CH)**

(74) Representative: **Lucke, Andreas**
 **Boehmert & Boehmert**
 **Anwaltspartnerschaft mbB**
 **Pettenkoferstrasse 22**
 **80336 München (DE)**

(54) **A METHOD AND SYSTEM FOR TRAINING HYBRID QUANTUM-CLASSICAL MACHINE LEARNING MODELS**

(57) A computer-implemented method for training a hybrid quantum-classical machine learning model including a variational quantum circuit to approximate a given labeling function, the method comprising providing a variable quantum noise source in the variational quantum circuit, training the hybrid quantum-classical machine learning model based on a variation of variational parameters of the variational quantum circuit to approximate the given labeling function with the variable quantum noise source introducing a non-zero training noise level in the variational quantum circuit, and providing the hybrid quantum-classical machine learning model trained with the training noise level as a final trained hybrid quantum-classical machine learning model with the variable quantum noise source configured to introduce a noise level, which is different from the training noise level.

Fig. 4A

EP 4 625 270 A1

**Description**

FIELD OF THE INVENTION

The present invention is in the field of quantum machine learning. More precisely, the present invention relates to training methods for hybrid quantum-classical machine learning models and associated systems.

BACKGROUND

Quantum computers provide a platform of controllable quantum mechanical systems whose state and interaction can be controlled in order to perform a computation. The computation is realized by a deterministic evolution of the controllable quantum mechanical systems, and the state of the quantum mechanical systems can be measured to determine the outcome of the computation.

The quantum computer generally encodes information in so called qubits, acting as a quantum mechanical equivalent of classical bits. Qubits are physical systems whose quantum mechanical state can be (coherently) controlled and (substantially) preserved between two basis states during the time of a computation, in the following referred to as |0> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps or access a large internal state space.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Despite these shortcomings, promising applications for near term available quantum processors exist, i.e. noisy intermediate-scale quantum (NISQ) devices, such as variational quantum algorithms. In variational quantum algorithms, the action of the quantum gates is parametrized in terms of variational parameters, and the variational parameters may be systematically varied with the help of a classical computing resource, in a manner analogous to machine learning, e.g. by implementing a kernel method for classifying an input using a variational quantum circuit. By varying the variational parameters to extremize a cost/loss function, which attributes a cost to the output of the variational quantum circuit with respect to an optimal solution, an output of the variational quantum circuit can be "trained" to provide an optimal solution to an unseen set of inputs. In these applications, entanglement between different qubits may give access to a large internal state space to provide "quantum advantage".

SUMMARY OF THE INVENTION

The known methods and systems which implement machine learning type models with variational quantum circuits however often suffer from overfitting, which can reduce prediction accuracy for a target function and failure to generalize the provided training data, and the barren plateau problem, in which the hybrid quantum-classical machine learning model may remain stuck in a local minimum without providing optimal performance.

In view of this state-of-the-art, the object of the invention is to provide a method for training a hybrid quantum-classical machine learning model and corresponding systems which can overcome problems related to overfitting or inadvertent convergence in local minima.

This object is solved by methods and a system according to the independent claims. The dependent claims relate to preferred embodiments.

According to a first aspect, a computer-implemented method for training a hybrid quantum-classical machine learning model including a variational quantum circuit to approximate a given labeling function is provided. The variational quantum circuit comprises a plurality of variational quantum gates whose action on qubits is parametrized by associated variational parameters and a plurality of encoding gates for encoding an input feature for the labeling function in a quantum state of the qubits. The method comprises providing a variable quantum noise source in the variational quantum circuit, and training the hybrid quantum-classical machine learning model based on a variation of variational parameters of the variational quantum circuit to approximate the given labeling function with the variable quantum noise source introducing a non-zero training noise level in the variational quantum circuit. The method further comprises providing the hybrid quantum-classical machine learning model trained with the training noise level as a final trained hybrid quantum-classical machine learning model with the variable quantum noise source configured to introduce a noise level, which is different from the training noise level.

Noise in quantum mechanical systems generally induces decoherence of the quantum state and is therefore generally associated with a reduction in the reliability of a quantum computation system, which is often countered with the application of error correction strategies. However, the inventors found that by controlling the amount of noise used for training a hybrid quantum-classical machine learning model, an improvement of the accuracy of predicting the labeling function can be reached for for some non-zero addition of noise in the system, when the hybrid quantum-classical machine learning model is applied to validation data different from the training data, i.e. data not seen by the hybrid quantum-classical machine learning model during training.

Specifically, the inventors found that the introduction of noise in the training stage, in which the hybrid quantum-classical machine learning model is trained based on the training data can improve the prediction of a labeling function for validation data, which was not encountered by the hybrid quantum-classical machine learning model during the training. Thus, the introduction of noise may reduce the amount of overfitting for the training data or can improve the generalization power of the hybrid quantum-classical machine learning model trained with the variable quantum noise source introducing a non-zero training noise level. The final trained hybrid quantum-classical machine learning model may be provided with a noise level which is smaller than the training noise level, e.g. with the variable quantum noise source removed or with a lower noise level introduced by the variable quantum noise source.

In some examples, the variable quantum noise source introduces a quantum decoherence channel into the variational quantum circuit.

A quantum decoherence channel is considered to act on the quantum state of qubits acted on by the variational quantum circuit, e.g. through a stochastic action on the quantum state of the qubits and/or through a quantum decoherence channel native to the hardware implementation of the variational quantum circuit.

Decoherence generally arises as a result of the interaction between a quantum system and its environment. In the case of quantum processing units, the quantum state of the environment is generally not well known, and the state of the system qubits may be described in terms of the density matrix formalism to account for the incomplete knowledge. In general, the state of an N qubit system interacting with its environment can be described by the density matrix $\rho$

$$\rho = \sum_j p_j \, |\psi_j\rangle\langle\psi_j| \tag{1}$$

which denotes a probabilistic ensemble of pure states $|\psi_j\rangle$ where $p_j$ is the probability that the state of the system is $|\psi_j\rangle$. An operation on this system can in turn be described in terms of a set of Kraus operators, $E_k$, which act on the density matrix as follows

$$\mathcal{E}(\rho) = \sum_k E_k \rho E_k^\dagger \tag{2}$$

where the set of operators $\{E_k\}$ describe the quantum operation $\varepsilon$, often referred to as a 'quantum channel', and obey the completeness relation

$$\sum_k E_k^\dagger E_k = \mathbb{I} \tag{3}$$

In this context, the influence of noise can be understood as the action of a certain quantum operation on the quantum state of the qubits used for the variational quantum circuit.

In some examples, the variable noise level parametrizes an additional amplitude-damping channel and/or an additional phase-damping and/or an additional depolarization channel.

Amplitude-damping generally corresponds to energy loss to the environment and can be described by the probability of a quantum system (qubit) in an excited state " $|1\rangle$" decaying into a "ground" state "$|0\rangle$", e.g. a relaxation process of an electron spin state or between energy levels of an atom/molecule. This amplitude-damping channel can be described, with a certain amplitude damping decay parameter $\gamma_{AD}$, by the following set of Kraus operators:

$$E_0 = \begin{bmatrix} 1 & 0 \\ 0 & \sqrt{1 - \gamma_{AD}} \end{bmatrix}$$

$$E_1 = \begin{bmatrix} 0 & \sqrt{\gamma_{AD}} \\ 0 & 0 \end{bmatrix} \qquad (4)$$

Phase-damping represents a type of noise that destroys quantum coherence, and generally corresponds to a contraction of the Bloch sphere in the x - y plane. This results in a destruction of quantum superpositions in the limit $\gamma_{PD} \to 1$, with a certain phase damping channel decay parameter $\gamma_{PD}$, and a density matrix that describes entirely classical probability distributions of the quantum states $|0\rangle$ and $|1\rangle$. The phase-damping channel can be described by the following set of Kraus operators:

$$E_0 = \begin{bmatrix} 1 & 0 \\ 0 & \sqrt{1 - \gamma_{PD}} \end{bmatrix}$$

$$E_1 = \begin{bmatrix} 0 & 0 \\ 0 & \sqrt{\gamma_{PD}} \end{bmatrix} \qquad (5)$$

Depolarizing noise corresponds to the qubit experiencing an 'error' with probability $p$. Possible types of error are phase flip (E1), bit flip (E2), or simultaneous phase-bit flip (E3). In this case the Kraus operators for describing the corresponding depolarizing channel, with a certain depolarizing channel decay parameter $\gamma_{DP}$, can be described by the identity matrix and the three Pauli matrices, wherein the respective errors are applied with equal probability:

$$E_0 = \sqrt{1 - \gamma_{DP}} \begin{bmatrix} 1 & 0 \\ 0 & 1 \end{bmatrix}$$

$$E_1 = \sqrt{\frac{\gamma_{DP}}{3}} \begin{bmatrix} 1 & 0 \\ 0 & -1 \end{bmatrix} \qquad (6)$$

$$E_2 = \sqrt{\frac{\gamma_{DP}}{3}} \begin{bmatrix} 0 & 1 \\ 1 & 0 \end{bmatrix}$$

$$E_3 = \sqrt{\frac{\gamma_{DP}}{3}} \begin{bmatrix} 0 & -i \\ i & 0 \end{bmatrix}$$

In some examples, the variable quantum noise source comprises an additional idle time of the variational quantum circuit.

Introducing an additional idle time as part of applying the variational quantum circuit to a plurality of qubits can introduce a controlled decoherence channel, which may introduce amplitude-damping as well as phase-damping depending on the underlying hardware architecture. The idle time may be distributed throughout the variational quantum circuit, e.g. after the application of each layer of quantum gates of the variational quantum circuit, or may be introduced at the end of the variational quantum circuit prior to measuring the state of the qubits. The probability of energy and/or phase relaxation of the qubits may be a function of the idle time, such that by varying the idle time, the amount of amplitude-damping and/or phase-damping may be variably introduced into the variational quantum circuit.

In some examples, the variable quantum noise source comprises a randomly applied quantum gate whose action is applied to a qubit of the variational quantum circuit with a parametrized probability.

The randomly applied quantum gate may introduce a controllable depolarizing channel into the variational quantum circuit. For example, a random number generator may select the identity operator or one of the three Pauli operators to be applied to the state of one of the qubits, thereby stimulating the experience of a bit flip, a phase flip, or a simultaneous phase-bit flip, e.g. as provided in equation (6).

In some examples, the randomly applied quantum gate implements the action of one of the three Pauli operators, in particular based on a stochastic choice selecting one of the three Pauli operators with a third of the parametrized probability, respectively.

However, the stochastic application of other quantum gates, such as arbitrary rotations of the qubit state, e.g. a X, Y, or Z-rotations on the Bloch sphere, or stochastically applied multi-qubit gates, may also be used to implement a depolarizing channel in examples, wherein a magnitude of the action and/or a type of action, such as rotation axis, may be randomly determined for each execution of the variational quantum circuit.

After the hybrid quantum-classical machine learning model has been trained, the noise level may be reduced, such as by reducing an amount of variable noise introduced by the variable quantum noise source or by removing the variable quantum noise source. In some examples, the variable quantum noise source is implemented by controlling quantum error correction operations, e.g. by through a reduction of quantum error correction to controllably increase quantum noise in the variational quantum circuit.

In some examples, the final trained hybrid quantum-classical machine learning model does not feature the variable quantum noise source.

For example, the final trained hybrid quantum-classical machine learning model may be provided without the idle time introduced as the variable quantum noise source and/or with the randomly applied quantum gate removed or replaced with the action of the identity operator and/or with increased or maximum error correction.

In some examples, the hybrid quantum-classical machine learning model features multiple variable quantum noise sources, e.g. to introduce a certain combination of amplitude-damping/phase-damping and depolarizing noise. The noise level may be controlled to optimize the generalization of the training data by the hybrid quantum-classical machine learning model answers or to minimize overfitting of training data.

In some examples, the noise level is a hyperparameter of the training which is systematically varied to minimize the validation loss.

The hybrid quantum-classical machine learning model may be trained based on training data to predict the labeling function and may be tested on validation data without the variable quantum noise source, and the noise level may be systematically varied, such that the test accuracy of predicting the labeling function for the validation data is maximized.

The method may comprise obtaining a set of training data as discretized point representing the labeling function, e.g. for supervised learning, and may further comprise obtaining a set of validation data as further discretized points representing the labeling function. A discretized point of training/validation data is considered to include a set of input data values, such as a vector of input features, and may further comprise a corresponding label recorded for the input data in the training/validation data for the set of input data values.

As a result, the hybrid quantum-classical machine learning model trained with the method according to the first aspect may feature improved accuracy when compared to a model trained without added noise, and may therefore provide improved accuracy for classification and/or regression problems informing the labeling function.

In some examples, the method further comprises training the hybrid quantum-classical machine learning model for two different noise levels of the variable quantum noise source, determining a validation loss for the hybrid quantum-classical machine learning model trained with the two different noise levels based on the set of validation data different from a set of training data used for training the hybrid quantum-classical machine learning model, and determining an optimal training noise level for training the hybrid quantum-classical machine learning model based on the values of the validation loss, wherein the final trained hybrid quantum-classical machine learning model is trained with the optimal training noise level.

In other word, the method may comprise training the hybrid quantum-classical machine learning model with a first noise level, determining a validation loss associated with the first noise level, training the hybrid quantum-classical machine learning model with a second noise level, and determining a validation loss associated with the second noise level, wherein the first noise level and the second noise level are different, and determining the optimal training noise level based on the first noise level and the second noise level. The first noise level and the second noise level may be based on a different configuration of the variable noise source, such as a different delay time during an execution of the variational quantum circuit or a different probability of randomly introducing an additional quantum operation to include a random manipulation of the quantum state of the qubits. Training the hybrid quantum-classical machine learning model with two different noise levels may be part of systematically varying the training noise level as a hyperparameter of a training process.

Depending on the hardware architecture for implementing the variational quantum circuit, the method may also benefit from an increase of both the training noise level as well as the noise of the trained hybrid quantum classical machine learning model, i.e. with the variable noise source introducing additional noise after the training has been completed.

According to a second aspect, a computer-implemented method for training a hybrid quantum-classical machine learning model is provided including a variational quantum circuit to approximate a given labeling function. The method comprises obtaining a set of training data and a set of validation data, and providing the variational quantum circuit with a variable quantum noise source in the variational quantum circuit. The method further comprises training the hybrid quantum-classical machine learning model based on a variation of variational parameters of the variational quantum circuit to approximate the given labeling function for the training data, wherein the hybrid quantum-classical machine learning model is trained for two different training noise levels of the variable quantum noise source, and determining a respective validation loss for the hybrid quantum-classical machine learning model trained with the two different training noise levels based on the set of validation data different from the set of training data used for training the hybrid quantum-classical machine learning model. The method further comprises determining an optimal training noise level for training the hybrid quantum-classical machine learning model based on the values of the validation loss.

Depending on the noise level native to the hardware for implementing the hybrid quantum-classical machine learning model, it may be sufficient or even optimal to increase both the training noise level and the noise level of the trained hybrid quantum-classical machine learning model.

In some cases, both the training noise level and the noise level for the validation loss are iteratively optimized to obtain a set of optimal noise levels for training a final trained hybrid quantum-classical machine learning model and/or for providing the final trained hybrid quantum-classical machine learning model with or without a variable quantum noise source of the optimal training noise level.

According to a third aspect, a trained hybrid quantum-classical machine learning model including a variational quantum circuit and trained to approximate a given labeling function is provided, wherein the trained hybrid quantum-classical machine learning model has been trained with the variational quantum circuit comprising a variable quantum noise source introducing a non-zero training noise level in the variational quantum circuit during the training, such that a validation loss of the hybrid quantum-classical machine learning model is minimized, wherein the trained hybrid quantum-classical machine learning model includes the variable quantum noise source with a noise level different from the training noise level.

The hybrid quantum-classical machine learning model may be trained with the method according to the first or second aspect and may feature any of the features imposed by the method of the first or second aspect or any combination thereof, such as the optimum training noise level determined as part of the method according to the second aspect.

The hybrid quantum-classical machine learning model may be defined in terms of a quantum circuit architecture, e.g. including a number of qubits as well as an arrangement of encoding gates, variational quantum gates and multi quantum gates to form a variational quantum circuit, optionally in terms of a specific hardware implementation, and including the variable noise source. The hybrid quantum-classical machine learning model may further include the variational parameters and the noise level or any parametrization or implementation parameters thereof. The hybrid quantum-classical machine learning model may further define how an input for the labeling function, e.g. a feature vector is encoded through the action of the encoding gates in the quantum state of the qubits, e.g. based on a chosen encoding strategy and/or scaling functions, and may further define how a (measured) output of the variational quantum circuit is transformed towards a label of the labeling function, such as a function value or output class.

The hybrid quantum-classical machine learning model can be implemented as part of a hybrid quantum-classical quantum computation system, which can include classical processing resources and quantum hardware, which may include qubits and hardware for manipulating and measuring the state of the qubits according to the variational quantum circuit. The classical processing resources can be configured to control the quantum hardware to implement the hybrid quantum-classical machine learning model and/or to implement a training of the hybrid quantum-classical machine learning model according to the first aspect and/or second aspect.

According to a fourth aspect, a system for training a hybrid quantum-classical machine learning model including a variational quantum circuit to approximate a given labeling function is provided. The system comprises a processing system based on classical hardware configured to establish the variational quantum circuit with a variable quantum noise source in the variational quantum circuit. The system is further configured to train the hybrid quantum-classical machine learning model based on a variation of variational parameters of the variational quantum circuit to approximate the given labeling function with the variable quantum noise source introducing a non-zero training noise level in the variational quantum circuit, and to provide the hybrid quantum-classical machine learning model trained with the training noise level as a final trained hybrid quantum-classical machine learning model with the variable quantum noise source configured to introduce a training noise level, which is different from the training noise level.

In some examples, the variational quantum circuit is implemented in quantum hardware and the processing system is configured to specify a quantum circuit architecture and/or variational parameters for implementing the hybrid quantum-classical machine learning model.

For example, the processing system may specify a number of qubits of the variational quantum circuit and a sequence of quantum gates as part of implementing the variational quantum circuit. The processing system may further specify operations for implementing the variational noise source, such as by specifying the location of randomly applied quantum gates in the variational quantum circuit and/or by introducing an idle time as part of executing the variational quantum circuit. In some examples, the processing system is configured to obtain a set of training data as discretized points representing the given labeling function.

In some examples, training the hybrid quantum-classical machine learning model comprises iteratively optimizing the variational parameters of the hybrid quantum-classical machine learning model to minimize a loss of the hybrid quantum-classical machine learning model when tasked with providing a labeling result given an input feature vector of a set of training data.

Initial variational parameters for the variational quantum gates can encode an initial (random) guess for predicting the labeling function, and the outcome of the evaluation of the variational quantum circuit with the variational parameters can be measured (repeatedly) to determine a corresponding label. Based on the label, a loss function may be classically evaluated to attribute a loss to the label, or in other words, a measure is calculated of how good the label is.

Usually, the variable parameters are subsequently updated (iteratively) using a feedback-loop implemented in a classical processing system, such that the output approaches an optimal solution, i.e. an optimal label given the labeling function, making the overall method including the operation of the variational quantum circuit and its control/optimization a hybrid quantum-classical algorithm.

By training the system, the variational parameters may be systematically varied in an iterative manner, such that the variational quantum circuit approximates the output label.

In some examples, training the hybrid quantum-classical machine learning model comprises determining a loss associated with a labeling result of the hybrid quantum-classical machine learning model for a given input feature vector of a set of training data, and determining an update to the variational parameters of the hybrid quantum-classical machine learning model based on the loss.

The trainable parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the trainable parameters with respect to the loss attributed to the output label by the loss function.

In some examples, the processing system is configured to specify an action of a quantum gate based on a random choice during different executions of the variational quantum circuit during the training to implement the variable quantum noise source.

For example, the processing system may specify whether the quantum state of one of the qubits is modified based on the random choice and/or the nature of the modification, such as a rotation axis and/or a rotation angle for rotating the state of one of the qubits on the Bloch sphere.

During the training, the variational quantum circuits may feature randomly applied quantum gates applied to a single one of the qubits, a subset of the qubits, or all of the qubits, and/or may feature multiple randomly applied quantum gates applied to one of the qubits. The corresponding randomly applied quantum gates may be distributed throughout the variational quantum circuits or may be applied at the end of the variational quantum circuit. However, as the variational quantum circuit generally features entanglement between all of the qubits, it may suffice to introduce quantum noise to one of the qubits or a subset of the qubits, or to all of the qubits at a specific point in the variational quantum circuit.

In some examples, the system is configured to train the hybrid quantum-classical machine learning model for two different noise levels of the variable quantum noise source, and to determine a validation loss of the hybrid quantum-classical machine learning model trained with the two different noise levels for the set of validation data. The system is further configured to determine an optimal training noise level for training the hybrid quantum-classical machine learning model based on the values of the validation loss, wherein the trained hybrid quantum-classical machine learning model is trained with the optimal training noise level.

Training the hybrid quantum-classical machine learning model for the two different noise levels may be part of iteratively optimizing the training noise level for minimizing the validation loss of the hybrid quantum-classical machine learning model. The skilled person will appreciate that the optimal training noise level may be approximated or estimated based on the validation loss obtained for the two different noise levels or based on previous training process for a similar quantum circuit architecture and/or labeling function, and may not be strictly optimal when compared to an infinite number of iterative optimization steps. Rather, the optimal training noise may be an optimal noise estimate in view of the information on the validation loss for the two different noise levels in order to minimize the validation loss.

The system may implement the method according to the first or any combination of its embodiments. In particular, the system according to the fourth aspect may also benefit from any feature of the preferred embodiments of the first or second aspect. In addition, the system according to the fourth aspect may be configured to provide the model of the third aspect. As a further alternative aspect, the system may be configured to implement the method of the second aspect based on corresponding processing steps of the processing system.

The system may be controlled using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The system may comprise multiple servers for executing the respective steps, but the processing steps may equally be executed by a single server or a server system, which may distribute internal computations over multiple processing devices.

A hybrid quantum-classical computation system may be implemented with a classical processing system, which may comprise classical processing resources processing binary features based on a deterministic algorithm, and a quantum processing system implemented with a plurality of computation qubits which can be coherently manipulated with control operations.

The quantum processing system may comprise hardware for implementing quantum gates, such as by controlling an evolution of a state of a qubit, e.g. through controlling an action of function generators or lasers on the computation qubits.

The classical processing system may determine the quantum circuit, the variational parameters, an encoding gate action based on input features, or a combination thereof, and may initiate or control an action of the hardware for manipulating the quantum state of the computation qubits. The classical processing system may receive and process a measured output of the variational quantum circuit, and may determine updated variational parameters or an output label based on the measured output. In addition, the classical processing system may specify a noise level of the variable quantum noise source and/or may specify actions of the variational quantum circuit implementing the variable quantum noise source, e.g. based on a random choice of a random number generator. For example, the classical processing system may instruct the quantum hardware to implement a state manipulation of a qubit based on the random choice. Alternatively, the random choice may be generated by the quantum hardware, and the classical processing system may not be involved in the selection of the gate action implementing the variable quantum noise source.

In some examples, a control system comprises a classical processing system implemented in classical hardware.

According to a fifth aspect, a computer program is provided comprising machine-readable instructions, which when the computer program is executed by a processing unit cause the processing unit to implement a method according to the first aspect and/or second aspect, a trained hybrid quantum-classical machine learning model according to the third aspect and/or a system according to the fourth aspect.

The computer program may be provided on a non-transitory machine readable medium. Thus, a non-transitory medium may be provided comprising machine-readable instructions, which, when executed by a processing system, implement a method according to the first aspect or the second aspect, a trained hybrid quantum-classical machine learning model according to the third aspect and/or a system according to the fourth aspect.

The machine-readable instruction may coordinate a training of the hybrid quantum-classical computation model, or may implement a hybrid quantum-classical computation system for approximating a given labelling function based on previously obtained trainable parameters.

The machine-readable instructions may configure the plurality of variational quantum circuits, e.g. by determining an architecture or variational parameters of the variational quantum circuits and by instructing quantum manipulation hardware, such as function generators, laser control hardware, or the like for controllably manipulating a state of qubits in quantum hardware, to implement the variational quantum circuit including the variable quantum noise source. During an implementation of the system or method, the computer program may provide an input vector of features to the variational quantum circuit and may receive measured outputs of the variational quantum circuit.

In some examples, the machine-readable instructions determine parameter updates for the variational parameters.

DETAILED DESCRIPTION OF EMBODIMENTS

The features and numerous advantages of the methods, hybrid quantum-classical machine learning model and system according to the present invention will best be understood from a detailed description of preferred embodiments with reference to the accompanying drawings, in which:

Fig. 1    schematically illustrates an example of a hybrid quantum-classical computation system for implementing and driving a variational quantum circuit;

Fig. 2    schematically illustrates another example of a hybrid quantum-classical computation system for implementing and driving a variational quantum circuit;

Fig. 3 illustrates a flow diagram of a training method for determining an optimal training noise according to an example;

Figs. 4A, 4B illustrate examples of variational quantum circuits including variable quantum noise sources;

Fig. 5 illustrates results of simulating a training process of a variational quantum circuit, similar to the circuit shown in Figs. 4A, 4B;

Fig. 6 illustrates further results of simulating a training process of a variational quantum circuit, similar to the circuit shown in Figs. 4A, 4B;

Fig. 7 illustrates additional results of simulating a training process of a variational quantum circuit based on the example discussed in conjunction with Figs. 5, 6;

Fig. 8 illustrates a flow diagram of a training method for obtaining a trained hybrid quantum-classical machine learning model according to an example; and

Fig. 9 illustrates an example flowchart of a method for determining an optimized variational quantum circuit architecture for approximating a given labeling function.

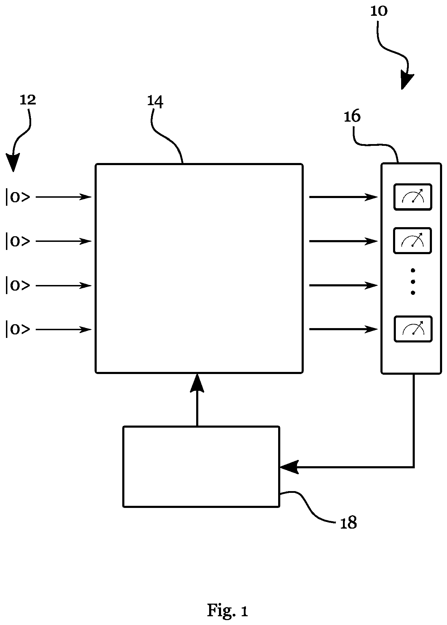

Fig. 1 schematically illustrates an example of a hybrid quantum-classical computation system 10 for implementing and driving a variational quantum circuit, according to a schematic quantum circuit diagram. The schematic quantum circuit diagram depicts an evolution of quantum states from left to right for an exemplary number of computation qubits, wherein control operations on the qubits can be arranged along lines of qubit state evolution to indicate an architecture or time-sequence associated with the quantum circuit. The skilled person will appreciate that additional coherent operations may be included as part of the quantum circuit, and the quantum circuit may be extended to an arbitrary number of qubits. Further, although reference may be made to specific control operations in the following description, the skilled person will appreciate that different control operations may be used to implement the system and methods of the present disclosure, e.g. depending on the physical representation of the qubits.

The illustrated system 10 of Fig. 1 comprises a qubit register 12 comprising a plurality of computation qubits. A plurality of quantum gates 14 may act on the computation qubits of the qubit register 12 to perform a computation/controlled evolution, wherein variable actions of the plurality of quantum gates 14 may be parametrized by variational parameters. The outcome of the computation may be measured by a measurement sensor 16 which projects the states of the computation qubits onto the computational basis states of the hybrid quantum-classical computation system 10. The outcome can be received by a control system 18.

The control system 18 may be configured to repeatedly perform a computation sequence. The computation sequence may comprise initializing the computation qubits of the qubit register 12 before each computation, such as into the ground state of each computation qubit, e.g. to form an initial state of the computation qubits of | oo...o>. The initialization of the computation qubits into their respective ground state may in some examples comprise a relaxation process, and the initialization of the computation qubits may not require active control of the computation qubits.

The control system 18 may then apply the plurality of quantum gates 14 to the computation qubits of the qubit register 12 to drive a coherent evolution of the computation qubits. The control system 18 may optionally produce superposition states of all computation qubits, e.g. by applying a Hadamard gate to each of the computation qubits, and may subsequently apply the plurality of quantum gates 14 including variational quantum gates with the variable actions.

In variational quantum circuits, the action of at least some of the quantum gates in the variational quantum circuit is parametrized, such that a measured output of the computation qubits is a function of variational parameters parametrizing variable actions of the variational quantum gates, such as a rotation angle. The combined action of the at least partially parametrized quantum gates may be termed a variational quantum circuit.

Following the coherent evolution, the state of the computation qubits in the qubit register 12 may be measured with the sensor 16. The measurement sensor 16 may be a plurality of single qubit state detectors for measuring the state of each computation qubit following the evolution according to the plurality of quantum gates 14. Repeating the measurement may allow determining the probability of each measurement outcome and the result may be employed for assigning a label to an input vector of features. On the basis of the measured output, the control system 18 can classically calculate an "energy"/"cost"/"loss" of the label with a cost/loss function based on a labeling task. The labeling task may be specified according to a function, which assigns a loss to the measured output or the label derived therefrom, or may be specified according to pairs of sample input vectors of features and sample labels, e.g. as points of training data representing a labeling function, wherein the loss may be based on a difference between the output label and the sample label.

Conventionally, the control system 18 may repeat the computation sequence with adjusted variable actions based on the outcome, such as to progressively improve the quality of an output label associated with the measured outcome. For example, the control system 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum circuit towards an improved solution.

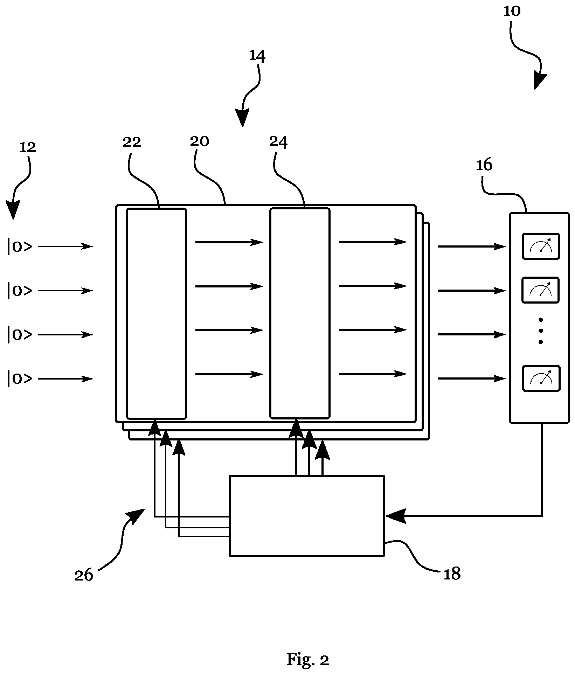

Fig. 2 illustrates another example of a hybrid quantum-classical computation system 10 for implementing and driving a variational quantum circuit. The system 10 comprises a qubit register 12 comprising a plurality of computation qubits. A plurality of quantum gates 14 are arranged in layers of quantum gates 20, which may act on the computation qubits of the qubit register 12 in sequence to perform a computation. Each layer of quantum gates 20 can comprise an encoding layer 22 and a variational layer 24, wherein the variational layer 24 comprises a plurality of variational quantum gates whose actions may be parametrized by different variational parameters in each layer of quantum gates 20. The encoding layer 22 comprises a plurality of encoding gates whose action is parametrized based on values of an input vector of features to be labeled according to a given labeling task. The encoding layer 22 in different layers of quantum gates 20 may be based on different sub-vectors 26 of the input vector of features, such that different layers of quantum gates 20 may encode different values of the input vector of features into the states of the computation qubits. Each layer of quantum gates 20, e.g. as part of each variational layer 24, may comprise multi-qubit gates for entangling the states of different computation qubits of the qubit register 12, such as a plurality of CNOT gates, as entangling gates for entangling quantum states of at least two qubits of the computation qubits.

The application of the variational layer 24 to the states of the computation qubits 24 after the action of the encoding layer 22 may prepare the quantum states of the computation qubits for the encoding of a different feature of the input vector of features in the next layer of quantum gates 20, or for encoding the same feature multiple times, optionally with a scaling factor applied to the value of the feature.

To encode the values of the input vector of features into the quantum Hilbert space, the "angle embedding" method can utilized, which involves rotating the respective qubit around an axis, such as the Z-axis (it can also be the X or Y-axis) on the Bloch sphere by an angle proportional to a value corresponding the respective feature.

The subsequent application of a plurality of layers of quantum gates to the qubits may form the variational quantum circuit, with the variational quantum circuit being parametrized by variational parameters for each layer. Each layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates to create a superposition state of all the computation qubits.

The outcome of the computation may be measured by a measurement sensor 16 after all layers of quantum gates 20 have acted on the computation qubits, wherein the measurement sensor 16 may project the states of the computation qubits onto the computational basis states of the hybrid quantum-classical computation system 10. Based on a measured output, which may be determined based on a measurement outcome obtained with the measurement sensor 16 or based on the measurement outcomes obtained with the measurement sensor 16 in multiple repetitions of applying the variational quantum circuit to the computation qubits, the control system 18 may determine an output label for labeling the input vector of features according to the given labeling task. Measuring the computation qubits multiple times may allow determining probabilities of measuring each of the computational basis states of the qubits for the quantum state produced by the application of the plurality of quantum gates.

The variational parameters should be optimized for predicting an optimal output label for the input vector of features in view of the labeling task according to a training algorithm, which may be an iterative process of updating the variational parameters according to an estimated gradient associated with the plurality of quantum gates 14. However, the Inventors found that varying the level of noise in the variational quantum circuit can increase the accuracy of predicting the output label, if the noise level is appropriately chosen.

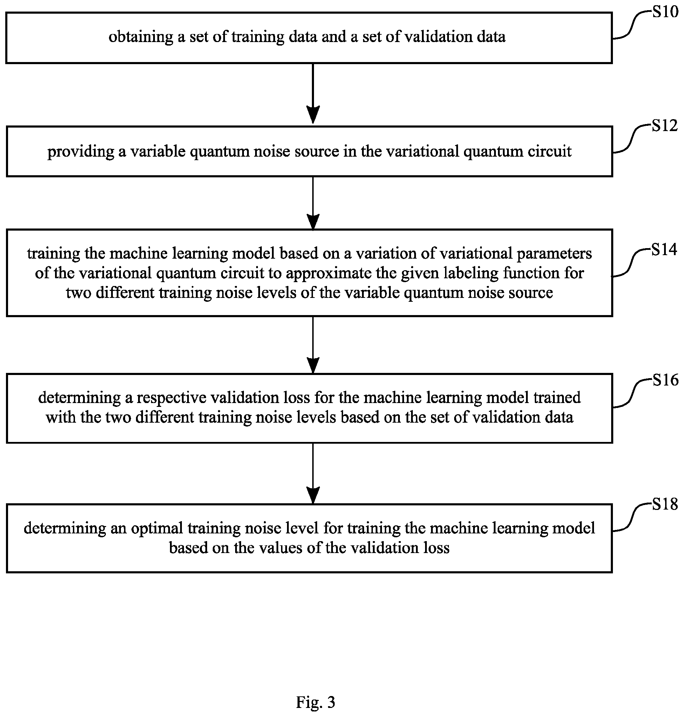

Fig. 3 illustrates a computer-implemented method for training a hybrid quantum-classical machine learning model including a variational quantum circuit to approximate a given labeling function. The method comprises obtaining a set of training data and a set of validation data (S10), e.g. as respective discretized points representing the given labeling function, and providing a variable quantum noise source in the variational quantum circuit (S12). The method further comprises training the hybrid quantum-classical machine learning model based on a variation of variational parameters of the variational quantum circuit to approximate the given labeling function for two different training noise levels of the variable quantum noise source (S14), and determining a respective validation loss for the hybrid quantum-classical machine learning model trained with the two different training noise levels based on the set of validation data (S16) different from the set of training data used for the training of the model. The method further comprises determining an optimal training noise level for training the hybrid quantum-classical machine learning model based on the values of the validation loss (S18).

Thus, the method provides a variable quantum noise source whose noise level can be varied during a training of the hybrid quantum classical machine learning model, and may be increased over a baseline noise level of the implementation hardware for implementing the variational quantum circuit. In principle, the addition of noise in a quantum circuit increases the randomness of the measured output and therefore reduces the accuracy of a quantum computation performed by the variational quantum circuit. However, the Inventors found that when optimizing the level of noise, e.g. as a hyperparameter of the training, regularization may be achieved in quantum circuits, thereby improving quantum machine learning prediction accuracy with added noise, a notable departure from the findings and implications of previous research.

The training algorithm for training the hybrid quantum-classical machine learning model may comprise applying the variational quantum circuit to a sample input vector of features representing one point of training data; determining a loss associated with an output label for the sample input vector of features and an optimal label recorded in the training data for the sample input vector of features, wherein the output label is based on a measured output state of the variational quantum circuit for the input vector of features, and determining an update for the variational parameters based on the loss. The update may be determined based on the loss for all points of the training data, and applying a cumulative update for all points of the training data may complete a training epoch of an iterative training algorithm. As an example of determining the update, the variational quantum circuit may be executed with shifted variational parameters for determining a partial derivative of the loss function, and the variational parameters of the variational quantum circuit may be updated based on the partial derivative, e.g. in a manner similar to stochastic gradient descent. The noise level may be iteratively improved based on training the variational quantum circuit with different noise levels to minimize the validation loss of the model for approximating the labeling function by controlling the variable quantum noise source.

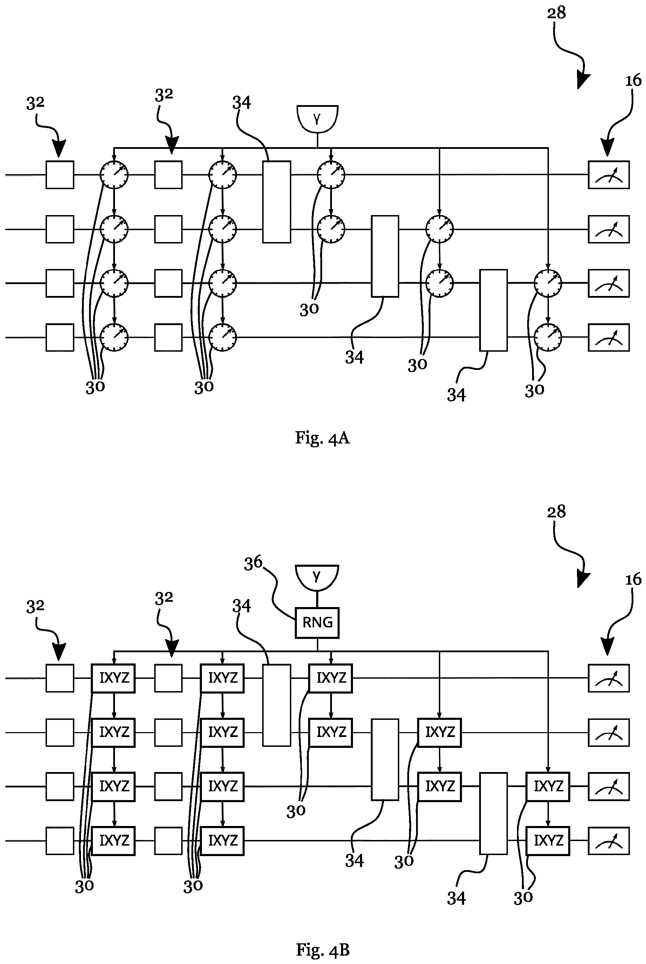

Fig. 4A illustrates an example of a variational quantum circuit 28 including variable quantum noise sources 30. The illustrated variational quantum circuit 28 comprises a plurality of single qubit gates 32 (illustrated with square boxes), such as encoding gates or variational gates, as well as a plurality of multi-qubit gates 34 affecting the state of multiple qubits, e.g. to induce entanglement between the respective qubits. Measurement sensors 16 may measure the states of the qubits after the variational quantum circuit 28 has been executed, such as to infer a characteristic outcome for a feature vector of input data encoded in the states of the qubits through the encoding gates.

In addition, the variational quantum circuit 28 comprises a variable quantum noise source 30 applied to the state of each qubit after the application of one of the quantum gates 32, 34. In the illustrated example, the variable quantum noise sources 30 are made of gate delays, which introduce a variable time period after the application of each quantum gate 32, 34, such that energy relaxation or phase relaxation processes native to the hardware may introduce quantum noise in the qubit state.

The gate delays for introducing a certain noise level may be determined by a processing system based on a specified decay parameter $\gamma$, and may be represented by the application of an operation described in terms of a set of Kraus operators, $E_k$, according to Eq. (2), with the Krauss operators of Eq. (4) and (5) for amplitude damping and phase damping, respectively.

Fig. 4B illustrates another example of a variational quantum circuit 28 including variable quantum noise sources 30. In Fig. 4B, instead of the introduction of gate delays, single qubit operations are introduced as variable quantum noise sources 30, which introduce depolarizing noise based on a stochastic application of additional quantum gates. In the illustrated example, a random number generator 36 may determine, based on a random choice for each execution of the variational quantum circuit 28, whether the state of a qubit is manipulated at a certain point in the variational quantum circuit 28 and how the state of the qubit is affected. In the illustrated example, the random number generator 36 determines, based on a given decay parameter $\gamma$, whether the qubit is subjected to the identity operator (no change in the qubit state), or whether the state of the qubit is subjected to one of the Pauli operators, corresponding to the occurrence of a phase flip (E1), bit flip (E2), or simultaneous phase-bit flip (E3), with the corresponding Krauss operators given in Eq. (6).

The random manipulation of the qubit states can simulate additional depolarization noise in the quantum system, wherein the decay parameter $\gamma$ may determine a magnitude of the depolarization noise in a variable manner.

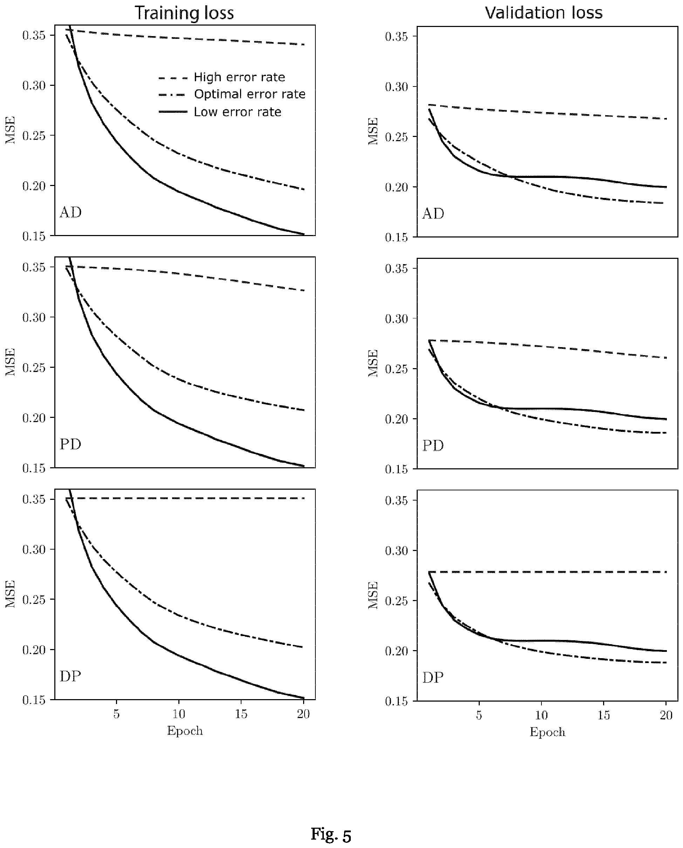

Fig. 5 illustrates the training and validation losses for three different types of noise (amplitude damping, AD; phase damping, PD; and depolarization noise, DP) and three different noise levels, as indicated in the legend, during the simulation of a training process for a variational quantum circuit 28, similar to the circuit shown in Figs. 4A and 4B. The variational quantum circuit 28 is trained to approximate the "diabetes dataset" commonly employed in machine learning as a benchmark, from which two baseline measurements (the BMI and the log of serum triglycerides level (ltg)) are selected as input features on which the models are trained to predict a quantitative measure of disease progression one year after the baseline measurements. The dataset is separated into 40 training samples (with each sample consisting of input features and corresponding prediction value) and 400 validation samples. The hybrid quantum-classical machine learning model is trained based on the training samples only and the graphs on the left illustrate the mean squared error (MSE) of the prediction result for the training samples ("training loss") . The graphs on the right illustrate the mean squared error (MSE) of the prediction result for the validation samples ("validation loss") which were not encountered during the training of the model.

The ansatz for constructing the variational quantum circuit 28 consists of four qubits, initially prepared in the $|0\rangle$ state. Two data features are then encoded on the first and third qubits, respectively via two RX gates (x-axis rotations proportional to the feature value), referred to as the feature encoding layer 22. The feature encoding layer 22 is followed by a layer of single qubit RY gates (y-axis rotations), and a ring of symmetric RXX Ising gates, referred to as the variational layer 24 layer.

The alternating feature encoding 22 and variational layers 24 can be repeated L times for a total depth of 4L quantum gates per qubit. Finally, a simultaneous Pauli-Z measurement is performed on all four qubits, and the expectation value is interpreted as the normalized prediction value.

In the simulations, the variable quantum noise source 30 is introduced via the application of decoherence channel operations as discussed in conjunction with Eq. (2)-(6) for specific types of noise, the noise level being parametrized by the respective decay parameter $\gamma$, and using a variational quantum circuit 28 with L=5 encoding layers 22 and variational layers 24.

In the figure, the resulting mean squared error (MSE) of the prediction value compared to the correct label of the training dataset is plotted against the number of Epochs that the variational parameters of the variational quantum circuit 28 have been optimized, i.e. of training the hybrid quantum-classical machine learning model and updating the variational parameters. As can be seen from the data, for all types of noise (i.e. AD - amplitude damping, PD - phase damping, and DP - depolarizing noise), the mean squared error of the prediction value for the training samples increases with increasing decay parameter $\gamma$, being lowest for the lowest error rate and highest for the highest error rate.

Conversely, for the validation loss indicated on the right side of the figure, the lowest error rate/noise level is not associated with the lowest mean squared error of the prediction quality, at least after approx. 10 training epochs. Rather, an intermediate "optimal" noise level results in a lower mean squared error of the validation loss in the trained model, indicating that the presence of noise during training may favorably affect the generalization and/or prediction capability of the hybrid quantum-classical machine learning model.

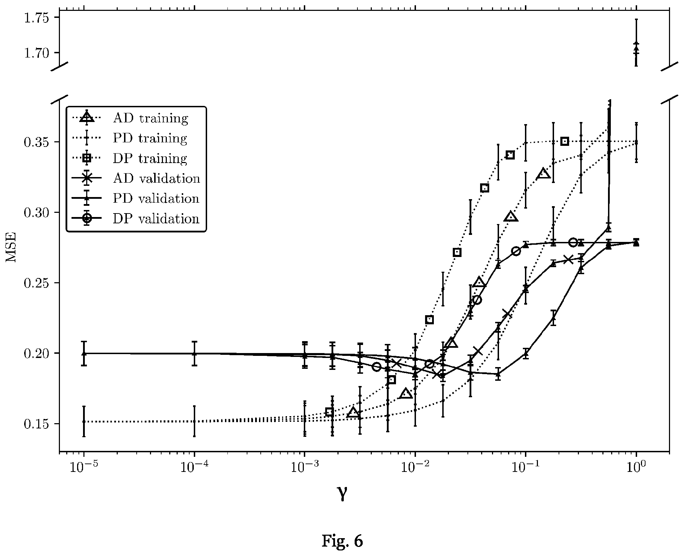

Fig. 6 illustrates the training and validation losses as functions of the noise rate for three types of noise (amplitude damping, AD; phase damping, PD; and depolarization noise, DP), resulting from simulating the training process of a variational quantum circuit 28 similar to the circuit shown in Figs. 4A and 4B. The results are based on the example discussed in conjunction with

Fig. 5, wherein the number of Epochs is fixed at 20, and again using a variational quantum circuit 28 with L=5 encoding layers 22 and variational layers 24. Solid lines indicate the validation loss in terms of the MSE for predicting the disease progression for the validation samples, and the dotted lines indicate the testing loss in terms of the MSE for predicting the disease progression for the training samples. Horizontal dotted lines indicate the MSE for a naive model which always predicts y=0/1 for the quantitative measure of disease progression.

Vertical error bars show the standard error across 16 models trained with randomly initialized variational parameters for each value of the decay parameter $\gamma$.

As expected, the testing loss (dotted lines) increases monotonically with increasing decay parameter $\gamma$ for all types of noise sources, i.e. additional quantum noise in the variational quantum circuit 28 decreases the accuracy of predicting the disease progression for the training samples using the hybrid quantum-classical machine learning model. However, when considering the validation loss, i.e. the accuracy of predicting the disease progression as a labeling function for unseen validation samples, the mean squared error appears to feature a minimum for a certain decay parameter $\gamma$. In other words, the presence of noise appears to increase the accuracy of predicting the disease progression in the example for the validation samples. In the example, for a certain range of the decay parameter, the validation loss is smaller with the additional noise, than with no noise at all. In the illustrated example problem, a maximum 8% improvement in the noisy model's ability to characterize the validation dataset relative to the noiseless model is observed.

It is noted that based on the analysis of the inventors, the level of noise currently achieved with contemporary quantum computation system may already be lower than the noise level introduced by the variable quantum noise sources 30 in the example. Specifically, based on the $T_1$, $T_2$, and $T_G$ times achieved with models known from the literature, it is estimated that the decay parameters for amplitude damping and phase damping are already smaller than $10^{-3}$ with $\gamma_{AD} \approx 8*10^{-4}$ and $\gamma_{PD} \approx 6.3*10^{-4}$ for the Google Sycamore quantum processor (based on the values reported in *Arute et al., "Quantum supremacy using a programmable superconducting processor", Nature 574, 505 (2019)*). Thus, a beneficial effect of increasing noise during training may already be obtained using currently obtainable quantum processing resources.

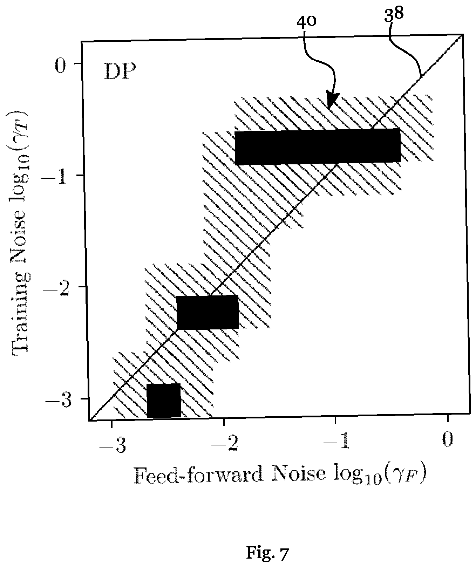

Fig. 7 illustrates additional results of simulating a training process of a variational quantum circuit 28 based on the example discussed in conjunction with Fig. 5 and 6. The graph illustrates the optimal MSE values obtained against different values of the training noise $\gamma_T$ and the Feed-forward noise $\gamma_F$, i.e. the noise used to determine the prediction values with the validation samples, for depolarizing noise (DP). The MSE value is provided according to a color scale with solid squares indicating a validation loss below a first threshold value, empty squares indicating a validation loss above a second threshold value, and dashed squares indicating a validation loss between the first and second threshold values.

The distribution of the validation loss is found to be asymmetric with respect to a diagonal line 38 indicating equal noise level during training and validation, featuring an island 40 of reduced MSE in an area, where the training noise level $\gamma_T$ is increased with respect to the feed-forward noise level $\gamma_F$.

Thus, an optimal model may be provided based on an optimal selection of the training noise different from the noise level introduced by the variable quantum noise sources 30 in the final trained quantum-classical machine learning model. For example, the noise level for the training phase and for the final model may both be iteratively optimized.

In some examples, the amount of noise during training may be increased based on the action of the variable quantum noise sources 30, with the final trained quantum-classical machine learning model not featuring the variable quantum noise sources 30 or a different, in particular lower, noise level than the training noise level.

Although Fig. 7 only illustrates the case of depolarizing noise, similar effects may be observed for other quantum noise types, e.g. amplitude damping or phase damping. The skilled person will further appreciate that the location and shape of the island 40 in Fig. 7 is based on the choice of the threshold parameters for illustrating the MSE values with a limited color scale and should not be considered to imply any limitation.

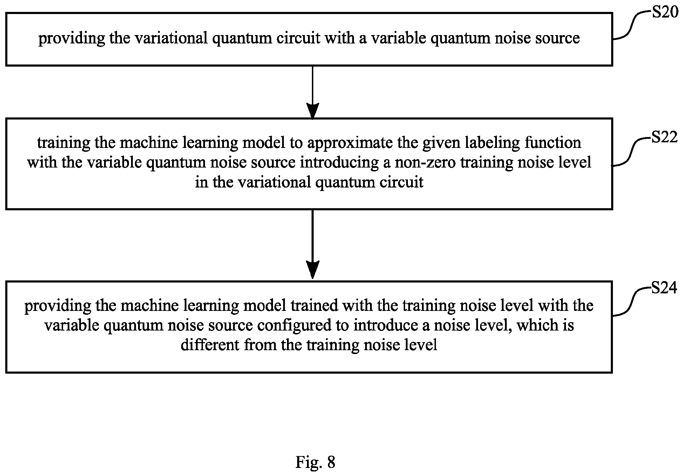

Fig. 8 schematically illustrates a method of training a hybrid quantum-classical machine learning model. The method comprises providing a variable quantum noise source 30 in the variational quantum circuit 28 (S20). The method further comprises training the hybrid quantum-classical machine learning model based on a variation of variational parameters of the variational quantum circuit 28 to approximate the given labeling function with the variable quantum noise source 30 introducing a non-zero training noise level in the variational quantum circuit 28 (S22), and providing the hybrid quantum-classical machine learning model trained with the training noise level as a final trained hybrid quantum-classical machine learning model with the variable quantum noise source 30 configured to introduce a noise level, which is different from the training noise level (S24).

The training noise level may be determined empirically, e.g. based on the method of Fig. 3 and/or an iterative optimization of the training noise level and the noise level of the trained hybrid quantum-classical machine learning model, or may be selected based on an estimate of an optimal noise, e.g. based on historical data for a similar circuit architecture or similar labeling function.

The noise level of the final trained hybrid quantum-classical machine learning model may be estimated based on historical data, and may be reduced with respect to the training noise level. The variational parameters of the final trained hybrid quantum-classical machine learning model may be unaffected/unchanged by the variation of the noise level, or may be adjusted to compensate for an average state manipulation originating from a difference of the training noise level and the noise level of the trained model. The trained quantum-classical machine learning model may subsequently be deployed on a hybrid quantum-classical computation system 10 for predicting the labeling function for unseen data.

The amount of noise added by the variable quantum noise sources 30 to optimize a training process may depend on the hardware implementation for executing the variational quantum circuit 28 and the variational quantum circuit architecture.

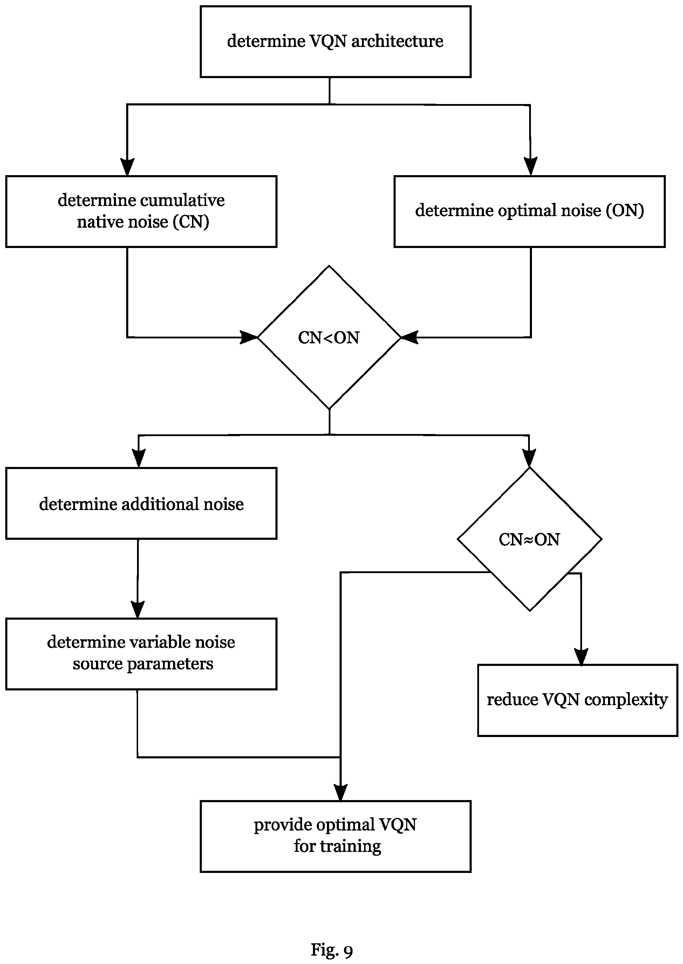

Fig. 9 illustrates an example flowchart of a method for determining an optimized variational quantum circuit (VQN) architecture for approximating a given labeling function, e.g. based on a regression task or a classification task. The illustrated method starts with the determination of a VQN architecture (e.g. in terms of an "ansatz"), e.g. based on a choice of layers and their number as well as the number of qubits, which may determine the number of quantum gates of the VQN architecture as well as their arrangement, such as the depth of the variational quantum circuit 28, for a given labeling function.

Subsequently, a cumulative noise (CN) of a hardware implementation for the quantum gates of the variational quantum circuit 28 may be determined, e.g. based on characteristic gate execution times, energy relaxation times, and phase relaxation times as well as gate error probabilities measured or estimated for the hardware implementation.

In addition, an optimal noise level may be determined for the VQN architecture, which may be based on the method illustrated in Fig. 3, or may be based on historical data for the same or a similar VQN architecture.

The cumulative noise native to the hardware implementation of the variational quantum circuit 28 may subsequently be compared to the optimal noise level. If the cumulative noise is smaller than the optimal noise level, it can be determined that additional noise can improve the model accuracy for unseen data (e.g. validation data) and a processing system may estimate or calculate parameters of a variable quantum noise source 30 introduced into the VQN architecture to raise the training noise level of the variational quantum circuit 28 to the optimal noise level.

If the cumulative noise of the hardware implementation of the VQN architecture is approximately equal to the optimal noise level, no additional variable quantum noise source is added, and the VQN architecture is provided as the optimal VQN architecture.

In case the cumulative noise of the hardware implementation is determined to be larger than the optimal noise level, the complexity of the VQN architecture may optionally be reduced, such as to reduce the effective cumulative noise. For example, the depth, e.g. number of layers, of the variational quantum circuit 28 may be reduced to adjust the cumulative noise to be approximately equal to or smaller than the optimal noise level, which may depend on the training data, the VQN architecture and/or the labeling function.

The skilled person will appreciate that the labeling function may be based on a regression task or a classification task for a set of input data values and may be similar to corresponding tasks encountered in classical machine learning, such as image classification, prediction of an optimal action based on a given set of state information, or estimating a solution to a problem considered to be computationally difficult, e.g. estimating parameters of a fluid dynamics problem, satellite mission planning, traveling salesman problems, or drug response prediction, just to give some examples.

The labeling task may comprise determining an optimal output label, e.g. an optimal next node during satellite mission planning, based on a set of data values provided to the hybrid quantum classical computation system as the input vector of features, such as a current snapshot state of operating parameters and known information, e.g. the location, of the satellite.

Thus, in general a vector of input features reflecting the set of data values may be encoded into the quantum states of the qubits, and the measured output of the variational quantum circuit may be used to determine the output label for the set of input features, which best solves the labeling task based on a previous training process of the variational parameters.

The variational quantum circuit 28 may be implemented in quantum hardware. In the preliminary experiments of the inventors, the variational quantum circuit 28s were generally implemented in a simulation of a quantum device running on classical hardware. Even a simulated variational quantum circuit 28 may be beneficial in some examples, and the variational quantum circuit 28 may therefore be implemented on a classical computer using a quantum simulator. However, the system is preferably implemented with the variational quantum circuit 28s implemented in quantum hardware, such as to reduce a classical processing power and computation time required for simulating complex quantum hardware.

On quantum hardware, the output of the variational quantum circuit 28 may be measured as a measured output, e.g. a projection of the qubit state between "0" and "1" for each of the qubits. Said measured output may subsequently be used by a classical portion of a hybrid quantum-classical computation system, i.e. a processing system based on deterministic hardware, to determine an output label corresponding to an input vector of features, e.g. by a pre-determined mapping or using a classical machine learning model for interpreting the output of the variational quantum circuit 28, which may be trained jointly or independently with respect to the variational parameters of the variational quantum circuit 28.

The values of an input vector of features provided to the quantum hardware may be obtained from a set of input data values through a transformation, such as a scaling function, e.g. to scale an input value to a range of angles between 0 and $2\pi$, as part of a suitable normalization function, which may map the input data values to a range of values for angle embedding.

In some examples, the variational quantum circuit 28 may be combined with a classical machine learning classifier, e.g. a neural network based on artificial neurons, to solve the labeling task, such as to process an output of a classical machine learning classifier with the variational quantum circuit 28, provide an output for a classical machine learning classifier based on the measured output of the variational quantum circuit 28, or both. The classical machine learning classifiers may be trained jointly or separately with the optimization of the variational parameters.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | system |
| 12 | qubit register |
| 14 | plurality of quantum gates |
| 16 | measurement sensors |
| 18 | control system |
| 20 | layers of quantum gates |
| 22 | encoding layer |
| 24 | variational layer |
| 26 | sub-vector of input data |
| 28 | variational quantum circuit |
| 30 | variable quantum noise sources |
| 32 | single-qubit gate |
| 34 | multi-qubit gate |
| 36 | random number generator |
| 38 | diagonal |
| 40 | island |

**Claims**

1. A computer-implemented method for training a hybrid quantum-classical machine learning model including a variational quantum circuit to approximate a given labeling function, the variational quantum circuit comprising a plurality of variational quantum gates whose action on qubits is parametrized by associated variational parameters and a plurality of encoding gates for encoding an input feature for the labeling function in a quantum state of the qubits, the method comprising:

   providing a variable quantum noise source in the variational quantum circuit;
   training the hybrid quantum-classical machine learning model based on a variation of the variational parameters of the variational quantum circuit to approximate the given labeling function with the variable quantum noise source introducing a non-zero training noise level in the variational quantum circuit; and
   providing the hybrid quantum-classical machine learning model trained with the training noise level as a final trained hybrid quantum-classical machine learning model with the variable quantum noise source configured to introduce a noise level, which is different from the training noise level.

2. The method of claim 1, wherein the variable quantum noise source introduces a quantum decoherence channel into the variational quantum circuit.

3. The method of claim 1 or 2, wherein the variable noise level parametrizes an additional amplitude-damping channel and/or an additional phase-damping and/or an additional depolarization channel.

4. The method of any one of the preceding claims, wherein the variable quantum noise source comprises an additional idle time of the variational quantum circuit; and/or
   wherein the variable quantum noise source comprises a randomly applied quantum gate whose action is applied to a qubit of the variational quantum circuit with a parametrized probability.

5. The method of claim 4, wherein the randomly applied quantum gate implements the action of one of the three Pauli operators, in particular based on a stochastic choice selecting one of the three Pauli operators with a third of the parametrized probability, respectively.

6. The method of any one of the preceding claims, wherein the training noise level is a hyperparameter of the training which is systematically varied to minimize the validation loss.

7. The method of any one of the preceding claims, wherein the method further comprises:

   training the hybrid quantum-classical machine learning model for two different training noise levels of the variable quantum noise source;
   determining a respective validation loss for the hybrid quantum-classical machine learning model trained with the two different training noise levels based on a set of validation data different from a set of training data used for training the hybrid quantum-classical machine learning model;
   determining an optimal training noise level for training the hybrid quantum-classical machine learning model based on the values of the validation loss, wherein the final trained hybrid quantum-classical machine learning model is trained with the optimal training noise level.

8. A computer-implemented method for training a hybrid quantum-classical machine learning model including a variational quantum circuit to approximate a given labeling function, the method comprising:

   obtaining a set of training data and a set of validation data;
   providing the variational quantum circuit with a variable quantum noise source in the variational quantum circuit;
   training the hybrid quantum-classical machine learning model based on a variation of variational parameters of the variational quantum circuit to approximate the given labeling function for the training data, wherein the hybrid quantum-classical machine learning model is trained for two different training noise levels of the variable quantum noise source;
   determining a respective validation loss for the hybrid quantum-classical machine learning model trained with the two different training noise levels based on the set of validation data different from the set of training data used for training the hybrid quantum-classical machine learning model; and
   determining an optimal training noise level for training the hybrid quantum-classical machine learning model based on the values of the validation loss.

9. A trained hybrid quantum-classical machine learning model including a variational quantum circuit and trained to approximate a given labeling function, wherein the trained hybrid quantum-classical machine learning model has been trained with the variational quantum circuit comprising a variable quantum noise source introducing a non-zero training noise level in the variational quantum circuit during the training, such that a validation loss of the hybrid quantum-classical machine learning model is minimized, wherein the trained hybrid quantum-classical machine learning model includes the variable quantum noise source with a noise level different from the training noise level.

10. A system for training for training a hybrid quantum-classical machine learning model including a variational quantum circuit to approximate a given labeling function, the system comprising a processing system based on classical hardware configured to:

establish the variational quantum circuit with a variable quantum noise source in the variational quantum circuit;
train the hybrid quantum-classical machine learning model based on a variation of variational parameters of the variational quantum circuit to approximate the given labeling function with the variable quantum noise source introducing a non-zero training noise level in the variational quantum circuit;
provide the hybrid quantum-classical machine learning model trained with the training noise level as a final trained hybrid quantum-classical machine learning model with the variable quantum noise source configured to introduce a noise level, which is different from the training noise level.

11. The system of claim 10, wherein the variational quantum circuit is implemented in quantum hardware and wherein the processing system is configured to specify a quantum circuit architecture and/or variational parameters for implementing the hybrid quantum-classical machine learning model.

12. The system of claim 10 or 11, wherein training the hybrid quantum-classical machine learning model comprises iteratively optimizing the variational parameters of the hybrid quantum-classical machine learning model to minimize a loss of the hybrid quantum-classical machine learning model when tasked with providing a labeling result given an input feature vector of a set of training data.

13. The system of any one of claims 10-12, wherein training the hybrid quantum-classical machine learning model comprises determining a loss associated with a labeling result of the hybrid quantum-classical machine learning model for a given input feature vector of a set of training data, and determining an update to the variational parameters of the hybrid quantum-classical machine learning model based on the loss.

14. The system of any one of claims 10-13, wherein the processing system is configured to specify an action of a quantum gate based on a random choice during different executions of the variational quantum circuit during the training to implement the variable quantum noise source.

15. A computer program comprising machine-readable instructions, which when the computer program is executed by a processing system, cause the processing system to implement a method according to any one of claims 1-8 and/or to implement a trained hybrid quantum-classical machine learning model according to claim 9 and/or to implement a system according to any one of claims 10-14.

Fig. 1

Fig. 2

| obtaining a set of training data and a set of validation data | S10 |

| providing a variable quantum noise source in the variational quantum circuit | S12 |

| training the machine learning model based on a variation of variational parameters of the variational quantum circuit to approximate the given labeling function for two different training noise levels of the variable quantum noise source | S14 |

| determining a respective validation loss for the machine learning model trained with the two different training noise levels based on the set of validation data | S16 |

| determining an optimal training noise level for training the machine learning model based on the values of the validation loss | S18 |

Fig. 3

Fig. 4A

Fig. 4B

Fig. 5

Fig. 6

Fig. 7

providing the variational quantum circuit with a variable quantum noise source — S20

training the machine learning model to approximate the given labeling function with the variable quantum noise source introducing a non-zero training noise level in the variational quantum circuit — S22

providing the machine learning model trained with the training noise level with the variable quantum noise source configured to introduce a noise level, which is different from the training noise level — S24

Fig. 8

determine VQN architecture

determine cumulative
native noise (CN)

determine optimal noise (ON)

CN<ON

determine additional noise

CN≈ON

determine variable noise
source parameters

reduce VQN complexity

provide optimal VQN
for training

Fig. 9

Europäisches
Patentamt

European
Patent Office

Office européen
des brevets

**EUROPEAN SEARCH REPORT**

**Application Number**

EP 24 16 5772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG CHENYI ET AL: "Enhancing adversarial robustness of quantum neural networks by adding noise layers", 20230810, vol. 25, no. 8, 10 August 2023 (2023-08-10), XP020475692, DOI: 10.1088/1367-2630/ACE8B4 [retrieved on 2023-08-10] * page 1 - page 15 * | 1-15 | INV. G06N10/60 G06N10/20 G06N20/00 |
| A | DU YUXUAN ET AL: "Quantum noise protects quantum classifiers against adversaries", PHYSICAL REVIEW RESEARCH, [Online] vol. 3, no. 2, 27 May 2021 (2021-05-27), XP093203519, College Park, US ISSN: 2643-1564, DOI: 10.1103/PhysRevResearch.3.023153 Retrieved from the Internet: URL:https://journals.aps.org/prresearch/pdf/10.1103/PhysRevResearch.3.023153> [retrieved on 2024-09-10] * the whole document * | 1-15 | |
| A | SHUO LIU ET AL: "Training variational quantum algorithms with random gate activation", ARXIV.ORG, CORNELL UNIVERSITY LIBRARY, 201 OLIN LIBRARY CORNELL UNIVERSITY ITHACA, NY 14853, 14 March 2023 (2023-03-14), XP091622121, DOI: 10.1103/PHYSREVRESEARCH.5.L032040 * the whole document * | 1-15 | |

**TECHNICAL FIELDS SEARCHED (IPC)**

G06N

-/--

The present search report has been drawn up for all claims

| Place of search | Date of completion of the search | Examiner |
|---|---|---|
| The Hague | 12 September 2024 | Cilia, Elisa |

| | Europäisches Patentamt European Patent Office Office européen des brevets | **EUROPEAN SEARCH REPORT** | **Application Number** EP 24 16 5772 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARCELLO BENEDETTI ET AL: "Parameterized quantum circuits as machine learning models", QUANTUM SCIENCE AND TECHNOLOGY, vol. 4, no. 4, 13 November 2019 (2019-11-13), page 043001, XP055710377, ISSN: 2058-9565, DOI: 10.1088/2058-9565/ab4eb5 * the whole document * | 1-15 | |
| A | STEFANO MANGINI: "Variational quantum algorithms for machine learning: theory and applications", ARXIV.ORG, CORNELL UNIVERSITY LIBRARY, 201 OLIN LIBRARY CORNELL UNIVERSITY ITHACA, NY 14853, 16 June 2023 (2023-06-16), XP091539650, * the whole document * | 1-15 | |

TECHNICAL FIELDS
SEARCHED     (IPC)

The present search report has been drawn up for all claims

| Place of search | Date of completion of the search | Examiner |
|---|---|---|
| The Hague | 12 September 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................
& : member of the same patent family, corresponding document

EPO FORM 1503 03.82 (P04C01)

page 2 of 2